# EUROPÄISCHE PATENTSCHRIFT

(11) **EP 2 715 175 B1**
(45) Veröffentlichungstag und Bekanntmachung des Hinweises auf die Patenterteilung: **08.08.2018**
(21) Anmeldenummer: 12728946.0
(22) Anmeldetag: 03.05.2012
(51) Int. Cl.: F16D 23/12, F16D 48/06, B60K 6/387

(54) **VORRICHTUNG ZUM ANTRIEB EINES KRAFTFAHRZEUGES**
DEVICE FOR DRIVING A MOTOR VEHICLE
DISPOSITIF D'ENTRAÎNEMENT D'UN VÉHICULE AUTOMOBILE

(30) Priorität: 23.05.2011 DE 102011102222
(43) Veröffentlichungstag der Anmeldung: 09.04.2014
(73) Patentinhaber: Schaeffler Technologies AG & Co. KG, 91074 Herzogenaurach (DE)
(72) Erfinder: RUDER, Willi, 77933 Lahr (DE)
(86) Internationale Anmeldenummer: PCT/DE2012/000450
(87) Internationale Veröffentlichungsnummer: WO 2012/159598

(56) Entgegenhaltungen:
- DE-A1- 10 036 504
- FR-A1- 2 830 305
- US-A1- 2004 074 729

## Beschreibung

Die vorliegende Erfindung betrifft eine Vorrichtung zum Antrieb von Kraftfahrzeugen, insbesondere von Kraftfahrzeugen mit einer Primärantriebsmaschine und einer Sekundärantriebsmaschine. Die Erfindung wird nachfolgend im Zusammenhang mit einer Antriebsanordnung für einen Personenkraftwagen mit mehreren Antriebsmaschinen beschrieben, von denen zumindest eine ein für einen Personenkraftwagen hohes Drehmoment erzeugt. Es wird darauf hingewiesen, dass die vorgeschlagene Erfindung unabhängig von der Bauart des Kraftfahrzeuges und des Antriebsstrangs Verwendung finden kann.

An moderne Kraftfahrzeuge werden nicht nur hohe Anforderungen in Bezug auf die Fahrleistungen (beispielsweise Beschleunigung, Höchstgeschwindigkeit) und den Fahrkomfort (beispielsweise Noise-Vibration-Harshness Verhalten, NVH) gestellt, sondern auch an den effizienten Einsatz der für den Antrieb zur Verfügung stehenden Ressourcen, insbesondere den Kraftstoffverbrauch. Bei herkömmlichen Kraftfahrzeugen wird der Antriebsmotor, häufig eine Verbrennungskraftmaschine in Hubkolbenbauweise, während nicht unerheblicher Zeitanteile in ungünstigen Betriebsbereichen betrieben; des weiteren wird Energie, welche zuvor in den Antrieb des Kraftfahrzeug gesteckt wurde, insbesondere bei Bremsvorgängen, meist in nicht weiter nutzbare Wärmeenergie umgewandelt. Insbesondere die Forderung nach einer effizienteren Nutzung des Kraftstoffs, sei es um die Fahrleistungen zu erhöhen, sei es um den Spritverbrauch zu senken, hat in den letzten Jahren zur Entwicklung von Antriebssträngen für Kraftfahrzeuge geführt, welche mehrere unterschiedliche Antriebsmaschinen aufweisen. Kraftfahrzeuge mit solchen Antriebssträngen werden meist als Hybridfahrzeuge bezeichnet. Die Antriebsstränge dieser Kraftfahrzeuge sind häufig dazu in der Lage, Bremsenergie zurückzugewinnen und dem Antrieb des Fahrzeugs wieder zur Verfügung zu stellen, zudem ermöglichen diese Antriebsstränge häufig die Verschiebung des Betriebspunktes wenigstens einer Antriebsmaschine und ermöglichen damit einen effizienteren Betrieb des Kraftfahrzeugs.

Aus diesen Anforderungen ergeben sich insbesondere für die Verteilung der Drehmomente und Leistungen innerhalb dieser neuen Antriebsstränge neue Anforderungen. Die Verteilung der Drehmomente und Leistungen wird in der Regel durch Drehmomentübertragungseinrichtungen verwirklicht. Entgegen der gestiegenen Funktionalität, welche die Antriebsstränge von Hybridfahrzeugen aufweisen, ist der zur Verfügung stehende Bauraum nicht in gleichem Maß gewachsen, so dass für moderne Antriebsstränge häufig Drehmomentübertragungseinrichtungen, insbesondere Trennkupplungen, benötigt werden, welche ihre Aufgaben auf relativ kleinem Bauraum verwirklichen und zudem eine hohe Betriebssicherheit aufweisen.

Aus der DE 100 36 504 A1 ist eine Antriebsvorrichtung gemäß dem Oberbegriff des Anspruchs 1 bekannt.

Aus der US 2004/074729 A1 ist eine Antriebsvorrichtung bekannt, bei der eine Betätigungseinrichtung einen Aktor aufweist, welcher dafür vorgesehen ist, eine einer ersten Anpresskraft eines mechanischen Energiespeichers überlagerte zweite Anpresskraft zwischen einer Eingangseinrichtung und einer Ausgangseinrichtung aufzubringen.

Die Aufgabe der vorliegenden Erfindung ist daher, das über die Antriebsvorrichtung übertragbare Drehmoment ohne Vergrößerung des Bauraumbedarf zu erhöhen.

Diese Aufgabe wird erfindungsgemäß gelöst durch eine Vorrichtung mit den Merkmalen des unabhängigen Anspruchs 1; die abhängigen Vorrichtungsansprüche beschreiben vorteilhafte Weiterbildungen der erfindungsgemäßen Vorrichtung.

Eine für Kraftfahrzeuge weist eine Primärantriebsmaschine mit einer Primärantriebswelle auf, eine Sekundärantriebsmaschine, insbesondere ausgeführt als elektromechanischer Energiewandler, und eine Abtriebseinrichtung. Zwischen den Antriebsmaschinen und der Abtriebseinrichtung angebracht weist die Antriebsvorrichtung eine Kupplungseinrichtung auf, mit wenigstens einer Eingangseinrichtung, welche wahlweise das Drehmoment der Primärantriebsmaschine und/oder der Sekundärantriebsmaschine überträgt, wenigstens einer Ausgangseinrichtung, welche mit der Abtriebseinrichtung drehfest verbunden ist, wenigstens einem Kupplungselement, welches dafür vorgesehen ist, das Drehmoment der wenigstens einen Eingangseinrichtung zu übertragen, sowie einer Betätigungseinrichtung zum Herstellen und Lösen einer drehfesten Verbindung zwischen der wenigstens einen Eingangseinrichtung und der wenigstens einen Ausgangseinrichtung.

Die Betätigungseinrichtung weist wenigstens einen mechanischen Energiespeicher und wenigstens einen Aktor auf. Der mechanische Energiespeicher ist vorzugsweise als Tellerfeder ausgeführt und ist dafür vorgesehen, zum Herstellen der Drehmomentübertrag der Antriebsvorrichtung eine erste Anpresskraft zwischen der wenigstens einen Eingangseinrichtung und der wenigstens einen Ausgangseinrichtung aufzubringen. Der Aktor der Betätigungseinrichtung, bevorzugt ein elektromechanischer Aktor, ist dafür vorgesehen, eine im Wesentlichen dieser ersten Anpresskraft des mechanischen Energiespeichers überlagerte, zweite Anpresskraft zwischen der wenigstens einen Eingangseinrichtung und der wenigstens einen Ausgangseinrichtung aufzubringen. Die Kupplungseinrichtung weist eine Steuereinrichtung auf, welche dafür vorgesehen ist, Betriebszustände der Kupplungsvorrichtung und Bedienbefehle insbesondere des Fahrzeugnutzers zu erfassen sowie diese Betriebszustände, insbesondere hinsichtlich der aufzubringenden Anpresskraft, der Kupplungsvorrichtung zu steuern. Ein Verfahren zum Betrieb der Antriebsvorrichtung weist die Schritte auf:
- Erfassen der Werte von Parametern, welche den Betriebszustand der Antriebsvorrichtung charakterisieren,
- Lösen der Drehmomentübertragung abhängig von mindestens einem Wert der erfassten Parameter zum Betriebszustand der Antriebsvorrichtung mittels dem Aktor der Betätigungseinrichtung,
- Herstellen der Drehmomentübertragung abhängig von mindestens einem Wert der erfassten Parameter zum Betriebszustand der Antriebsvorrichtung mittels der Betätigungseinrichtung,
- Aufbringen einer Anpresskraft abhängig von mindestens einem Wert der erfassten Parameter zum Betriebszustand der Antriebsvorrichtung mittels dem Aktor der Betätigungseinrichtung, wobei das Aufbringen dieser Anpresskraft zu einer Erhöhung des durch die Kupplungsvorrichtung übertragbaren Drehmoments führt.
Die Funktion des Aufbringens der Anpresskraft zur Drehmomentübertragung mittels der Kupplungsvorrichtung in der Antriebsvorrichtung wird auf zwei unterschiedliche Einrichtungen aufgeteilt. Während im Stand der Technik die Anpresskraft allein durch einen mechanischen Energiespeicher, bevorzugt eine Tellerfeder, aufgebracht wird, wird bei Verwendung der Vorrichtung diese Anpresskraft durch einen Aktor verstärkt, welcher zusätzlich auch zum Einrücken und zum Ausrücken der Kupplungseinrichtung Verwendung findet.
Durch diese Gestaltung der Lösung kann also mittels des Aufbringens der zweiten Anpresskraft bei im Wesentlichen gleichbleibendem Bauraum und damit auch gleichbleibenden Reibradien eine Übertragung höherer Drehmomente der Antriebsvorrichtung erreicht wird. Dadurch ist die Antriebsvorrichtung insbesondere auch für einen Einsatz in HybridFahrzeugen geeignet, bei denen wenigstens eine Antriebsmaschine mit hohem zu übertragenden Drehmoment verbaut ist.

Unter einer Antriebsvorrichtung ist eine Vorrichtung zum Leiten von Antriebsleistung von wenigstens einer Antriebsmaschine an eine Abtriebseinrichtung zu verstehen. Vorzugsweise wird diese Antriebsleistung innerhalb der Antriebsvorrichtung als mechanische Leistung, welche insbesondere durch ein Drehmoment und eine Drehzahl gekennzeichnet ist, übertragen. Von der Abtriebseinrichtung aus wird die in der Antriebsvorrichtung übertragene Antriebsleistung weiter im Fahrzeugantrieb verteilt. Vorzugsweise erfolgt diese Verteilung über eine Abtriebswelle. Weiter vorzugsweise erfolgt diese Verteilung über eine Flexplatte. Weiter vorzugsweise erfolgt diese Verteilung über ein Eingangselement nachgeordnete Einrichtung im Antriebsstrang, insbesondere über einen Drehmomentwandler.

Unter einer Primärantriebsmaschine ist eine Antriebsmaschine zu verstehen, welche vorzugsweise Antriebsleistung zum Überwinden von Fahrtwiderständen, welche der Bewegung des Fahrzeugs entgegenstehen, bereitzustellen. Vorzugsweise wandelt die Primärantriebsmaschine Energie, welche bevorzugt in chemisch gebundener Form vorliegt, in mechanische Leistung um. Weiter vorzugsweise ist eine Primärantriebsmaschine als eine Wärmekraftmaschine ausgeführt. Vorzugsweise ist eine Primärantriebsmaschine als eine Verbrennungskraftmaschine, bevorzugt als eine Hubkolben-, Kreiskolben- oder Freikolbenmaschine ausgeführt. Weiter vorzugsweise gibt die Primärantriebsmaschine ihre mechanische Antriebsleistung an eine Primärantriebswelle ab.

Unter einer Primärantriebswelle ist eine Einrichtung einer Primärantriebsmaschine zu verstehen, an welcher die von der Primärantriebsmaschine zum Antrieb des Fahrzeugs zur Verfügung gestellte Leistung wenigstens teilweise abgegriffen werden kann. Vorzugsweise wird die Antriebsleistung der Primärantriebsmaschine von der Primärantriebswelle eines Drehmoments und einer Drehzahl abgenommen. Weiter vorzugsweise ist die Primärantriebswelle als eine Kurbel- oder Exzenterwelle ausgeführt.

Unter einer Sekundärantriebsmaschine ist eine Antriebsmaschine zu verstehen, welche vorzugsweise dazu vorgesehen ist, elektrische Leistung in mechanische Leistung oder umgekehrt umzuwandeln. Vorzugsweise wird eine Sekundärantriebsmaschine zum Antrieb des Kraftfahrzeugs oder zum Abbremsen des Kraftfahrzeugs herangezogen. Weiter vorzugsweise ist eine Sekundärantriebsmaschine als ein elektromechanischer Energiewandler ausgebildet. Vorzugsweise ist eine Sekundärantriebsmaschine als eine Gleichstrom-, Wechselstrom- oder Drehfeldmaschine ausgeführt. Vorzugsweise weist eine Sekundärantriebsmaschine zur Energiewandlung wenigstens eine Statoreinrichtung und wenigstens eine Rotoreinrichtung auf, welche ein Sekundärantriebselement bildet.

Unter einer Kupplungseinrichtung ist eine Einrichtung zu verstehen, welche dazu vorgesehen ist, die Drehmomentübertragung in dieser Antriebsvorrichtung zu beeinflussen. Eine Kupplungseinrichtung weist vorzugsweise wenigstens zwei Betriebszustände auf. In einem ersten, geschlossenen, Betriebszustand kann diese Kupplungseinrichtung eine mechanische Antriebsleistung übertragen. In einem zweiten, geöffneten, Betriebszustand kann die Kupplungseinrichtung keine mechanische Leistung übertragen. Weiter bevorzugt weist eine Kupplungseinrichtung mehr als zwei Betriebszustände auf, wobei im geschlossenen Zustand der Kupplungseinrichtung bei unterschiedlichen zu übertragenden Drehmomenten unterschiedliche Anpresskräfte mittels des Aktors der Betätigungseinrichtung aufgebracht werden, wobei insbesondere bei höheren Drehmomenten höhere Anpresskräfte aufgebracht werden.

Eine Kupplungseinrichtung weist wenigstens eine Eingangseinrichtung, wenigstens ein Kupplungselement, wenigstens eine Ausgangseinrichtung, eine Betätigungseinrichtung und vorzugsweise eine Steuereinrichtung auf. Vorzugsweise wird die übertragene mechanische Leistung im geschlossenen Betriebszustand von der Eingangseinrichtung über das Kupplungselement auf die Ausgangseinrichtung übertragen oder umgekehrt. Während dieser Drehmomentübertragung kontaktieren sich vorzugsweise die Eingangseinrichtung und das Kupplungselement, sowie das Kupplungselement und die Ausgangseinrichtung.

Unter einer Eingangseinrichtung der Kupplungseinrichtung ist eine im wesentlichen drehfest mit der Primärantriebswelle verbundene Einrichtung zu verstehen, bevorzugt eine Welle, an der radial wenigstens ein Eingriffselement drehfest angebracht ist, welches dafür vorgesehen ist, im geschlossenen Zustand der Kupplungseinrichtung Antriebsleistung von der Primärantriebswelle weiter an das Ausgangselement der Kupplungseinrichtung, insbesondere über ein Kupplungselement, zu übertragen. Bevorzugt sind die Drehachsen der Eingangseinrichtung und des Rotors der Sekundärantriebsmaschine identisch.

Unter einem Kupplungselement der Kupplungseinrichtung ist ein Element zur Übertragung von Kräften und Momenten, insbesondere von Anpresskräften und Drehmomenten, zu verstehen, welches wenigstens zwei Flächen mit einer im Wesentlichen zu entsprechenden Flächen der Eingangs- und Ausgangseinrichtung identischen radialen Beabstandung bezogen auf die Rotationsachse von Eingangs- und Ausgangseinrichtungen aufweist. Bevorzugt ist dieses Kupplungselement als Kupplungsscheibe ausgeprägt.

Unter einer Betätigungseinrichtung der Kupplungseinrichtung ist eine Einrichtung zu verstehen, welche eine Betätigungskraft insbesondere zum Herstellen oder Lösen einer Drehmomentübertragung aufbringt, wobei dieses Aufbringen einer Betätigungskraft bevorzugt durch einen externen Steuerbefehl zum Steuern dieser Antriebsvorrichtung erfolgt.

Eine Betätigungseinrichtung weist einen mechanischen Energiespeicher, insbesondere eine Tellerfeder, sowie einen Aktor auf, wobei hier insbesondere die Verwendung eines aus der DE 100 33 649 A1 bekannten elektromechanischen Axialantriebes vorgeschlagen wird. Die Offenbarung dieser Anmeldung soll ausdrücklich in die vorliegende Patenanmeldung aufgenommen werden.

Unter einem Aktor ist eine Einrichtung zu verstehen, welche auf Basis externer Steuerbefehle unter Verwendung Vorrichtungs-externer Energiequellen bezüglich der Rotationsachse der Sekundärantriebsmaschine axial gerichtete Kräfte ausbringen kann, wobei zumindest ein Bauteil dieses Aktors in beiden axialen Richtung beweglich ausgeführt ist, und wobei dieses zumindest eine Bauteil dafür vorgesehen ist, diese axialen Kräfte an den mechanischen Energiespeicher der Betätigungseinrichtung zu übertragen.

Zum Herstellen einer Drehmomentübertragung wird vorzugsweise mittels dem mechanischen Energiespeicher eine Betätigungskraft, insbesondere eine erste Anpresskraft, aufgebracht, welche diese Eingangseinrichtung und/oder diese Ausgangseinrichtung derart bewegt, dass diese zur Drehmomentübertragung, insbesondere unter Mitwirkung wenigstens eines Kupplungselements bevorzugt drehfest miteinander verbunden werden.

Zum Erhöhen des übertragbaren Drehmoments wird vorzugsweise mittels dem Aktor eine Betätigungskraft, insbesondere eine zweite Anpresskraft, aufgebracht, welche im Wesentlichen die mittels dem mechanischen Energiespeicher aufgebrachte Anpresskraft überlagert, wobei durch die Überlagerung der beiden Anpresskräfte eine im vergleich zur ersten Anpresskraft höhere gesamte Anpresskraft aufgebracht wird.

Zum Lösen dieser Drehmomentübertragung wird weiter vorzugsweise diese Eingangseinrichtung und/oder diese Ausgangseinrichtung durch diese Betätigungskraft derart bewegt, dass die drehfeste Verbindung im Wesentlichen unterbrochen wird.

In einer weiteren bevorzugten Ausführungsform weist eine Betätigungseinrichtung wenigstens eine Zylindereinrichtung, vorzugsweise zum Umwandeln eines hydraulischen oder eines pneumatischen Drucks, in eine Betätigungskraft auf. Weiter vorzugsweise weist eine Betätigungseinrichtung wenigstens eine doppelt wirkende Zylindereinrichtung, vorzugsweise zum Umwandeln eines hydraulischen oder eines pneumatischen Drucks, in eine Betätigungskraft auf, wobei unter dieser doppelten Wirksamkeit eine Aktuierbarkeit zum Herstellen und Erhöhen sowie zum Lösen der Drehmomentübertragung zu verstehen ist. Vorzugsweise weist eine Übertragungs-Betätigungseinrichtung eine Hebelmechanik zum Übertragen oder Verstärken dieser Betätigungskraft auf.

Unter einer Ausgangseinrichtung der Kupplungseinrichtung ist eine im Wesentlichen drehfest mit der Abtriebseinrichtung der Antriebsvorrichtung verbundene Einrichtung zu verstehen, welche dafür vorgesehen ist, im geschlossenen Zustand der Kupplungseinrichtung Antriebsleistung von der Eingangseinrichtung der Kupplungseinrichtung, insbesondere über ein Kupplungselement übertragen, aufzunehmen. Vorzugsweise ist die Ausgangseinrichtung auch mit dem Sekundärantriebselement der Sekundärantriebsmaschine drehfest verbunden, wobei dieses Sekundärantriebselement bevorzugt als Rotor ausgeführt ist. Bevorzugt weist die Ausgangseinrichtung die gleiche Drehachse auf wie das Sekundärantriebselement der Sekundärantriebsmaschine. Bevorzugt stützt sich die Ausgangseinrichtung dabei bezogen auf die Drehrichtung des Sekundärantriebselements der Sekundärantriebsmaschine axial an der Abtriebseinrichtung ab.

Unter einer Abtriebseinrichtung der Antriebsvorrichtung ist eine Einrichtung zu verstehen, welche dafür vorgesehen ist, die Antriebsleistung der Primär- und/oder Sekundärantriebsmaschine, welche in der Antriebsvorrichtung übertragen wird, für eine weitere Verwendung im Kraftfahrzeug bereitzustellen, bevorzugt in Form eines Drehmomentes, welches mit einer Drehzahl zur Verfügung gestellt wird. Vorzugsweise ist die Abtriebseinrichtung als Abtriebswelle ausgeführt. Weiter vorzugsweise ist die Abtriebseinrichtung als Flexplatte ausgeführt. Besonders bevorzugt ist die Abtriebseinrichtung im Wesentlichen drehfest mit einem Eingangselement einer der Antriebsvorrichtung nachgeordneten Einrichtung zur weiteren Drehmomentübertragung, insbesondere drehfest, verbunden.

In einer bevorzugten Weiterbildung der Antriebsvorrichtung weist diese eine Steuereinrichtung auf, welche dafür vorgesehen ist, Betriebszustände durch diese charakterisierende Parameter der Antriebsvorrichtung, insbesondere das durch die Antriebsvorrichtung zu übertragende Drehmoment, zu erfassen. Bevorzugt werden durch die Steuereinrichtung auch Bedienbefehle des Nutzers erfasst. Auf Basis der erfassten Werte der Parameter, insbesondere des zu übertragenden Drehmoments und/oder dieser Bedienbefehle des Nutzers, werden durch die Steuereinrichtung Schaltzustände, insbesondere des Aktors, der Betätigungseinrichtung gesteuert. Diese Schaltzustände beeinflussen den jeweiligen Betriebszustand der Antriebsvorrichtung, insbesondere der Kupplungseinrichtung, wobei bevorzugt die aus erster und zweiter Anpresskraft resultierende Anpresskraft zwischen der wenigstens einen Eingangseinrichtung und der wenigstens einen Ausgangseinrichtung der Kupplungseinrichtung beeinflusst wird.

In einer bevorzugten Weiterbildung der Antriebsvorrichtung ist der Aktor der Betätigungseinrichtung als elektromechanischer Axialantrieb ausgeführt. Bevorzugt ist dieser Axialantrieb ausgeführt als Axialantrieb mit wenigstens zwei Bauteilen, welche zur Erzeugung einer zueinander relativen axialen Bewegung in Umfangsrichtung zueinander verdrehbar sind, wobei diese relative axiale Bewegung der beiden Bauteile zueinander vorzugsweise durch ein Eingriffsmittel verursacht wird, welches in eine mit einem der Bauteile drehfest verbundene Schraubenfeder eingreift und dadurch die Windungen der Schraubenfeder in zwei Abschnitte teilt, deren Längenverhältnis in Axialrichtung sich bei einem Verdrehen der beiden Bauteile ändert.

Insbesondere wird die Verwendung eines aus der DE 100 33 649 A1 bekannten elektromechanischen Axialantriebes offenbart, bei welchem sich ein erstes Bauteil an einem zweiten Bauteil mittels wenigstens eines Eingriffsmittels axial abstützt und bei einer - mittels einem Elektromotor erzeugten - Verdrehung der beiden Bauteile gegeneinander in Umfangsrichtung ein Federdraht an dem wenigsten einen Eingriffsmittel vorbeigeführt wird. Abhängig von der Anzahl der Umdrehungen entsteht ein variabler Schraubenfederabschnitt, auf dem sich das wenigstens eine Eingriffsmittel abstützen kann, wodurch eine axiale Verlagerung der beiden Bauteile zueinander erfolgt.

In einer bevorzugten Weiterbildung der Antriebsvorrichtung ist der Aktor der Betätigungseinrichtung als Axialantrieb, bevorzugt als Axialantrieb mit einem fluidbetriebenen Ringkolben und einem Ringzylinder ausgeführt, wobei insbesondere pneumatisch oder hydraulisch betriebene Ringkolben vorgesehen sind.

In einer bevorzugten Weiterbildung der Antriebsvorrichtung ist die Sekundärantriebsmaschine der Antriebsvorrichtung als elektromechanischer Energiewandler ausgeführt, welcher eine Statoreinrichtung und eine, im Wesentlichen in dieser Statoreinrichtung, um eine Rotationsachse drehbare, Rotoreinrichtung aufweist, welche ein Sekundärantriebselement der Antriebsvorrichtung darstellt.

Diese Rotoreinrichtung weist eine Rotorausnehmung auf. Diese Rotorausnehmung ist insbesondere konzentrisch zu dieser Rotationsachse angeordnet. Vorzugsweise ist die Kupplungseinrichtung der Antriebsvorrichtung im Wesentlichen radial innerhalb dieser Rotorausnehmung angeordnet.

Unter einer Statoreinrichtung dieser Sekundärantriebsmaschine ist eine Einrichtung zu verstehen, welche relativ zu einer Rotoreinrichtung still steht. Vorzugsweise fließt während des Betriebs der Sekundärantriebsmaschine in einer Startoreinrichtung ein elektrischer Strom oder es wirkt ein von dieser ausgehendes magnetisches Feld. Weiter vorzugsweise weist eine Statoreinrichtung eine Kühleinrichtung, insbesondere zum Abführen von Wärme, auf.

Unter einer Rotoreinrichtung dieser Sekundärantriebsmaschine ist eine Einrichtung zu verstehen, welche gegenüber der Statoreinrichtung vorzugsweise drehbar gelagert ist. Weiter vorzugsweise ist diese Rotoreinrichtung im Wesentlichen innerhalb dieser Statoreinrichtung aufgenommen. Weiter vorzugsweise ist diese Rotoreinrichtung im Betrieb der Sekundärantriebsmaschine von einem elektrischen Strom durchflossen. Weiter vorzugsweise steht wenigstens während des Betriebs ein magnetisches Feld zum Betrieb dieser Sekundärantriebsmaschine zur Verfügung.

Unter einer Rotorausnehmung ist eine Ausnehmung innerhalb dieser Rotoreinrichtung aufzufassen. Vorzugsweise erstreckt sich diese Rotorausnehmung entlang einer Rotationsachse dieser Rotoreinrichtung und bildet eine randoffene Ausnehmung. Dabei ist die Rotoreinrichtung vorzugsweise derart in der Statoreinrichtung gelagert, dass die Rotoreinrichtung während des Betriebs der Sekundärantriebsmaschine um diese Rotationsachse eine Rotationsbewegung ausführt. Weiter vorzugsweise ist die Rotoreinrichtung in axialer Richtung teilweise, bevorzugt im Wesentlichen vollständig, von dieser Rotorausnehmung durchsetzt.

Unter radial ist im Wesentlichen die Erstreckung orthogonal von der Rotationsachse der Kupplungseinrichtung zu verstehen. Unter radial innerhalb dieser Rotorausnehmung ist zu verstehen, dass die Kupplungseinrichtung in radialer Richtung im Wesentlichen nicht über die Rotorausnehmung dieser Rotoreinrichtung hinausragt. Vorzugsweise können Bereiche der Kupplungseinrichtung, welche in axialer Richtung außerhalb dieser Rotorausnehmung liegen, eine radial größere Erstreckung aufweisen als die Rotorausnehmung. Weiter vorzugsweise weisen Bereiche der Kupplungseinrichtung, welche axial außerhalb dieser Rotorausnehmung liegen, in radialer Richtung keine größere Erstreckung auf als diese Rotorausnehmung.

In einer bevorzugten Weiterbildung der Antriebsvorrichtung ist die Kupplungseinrichtung entlang dieser Rotationsachse in axialer Richtung wenigstens teilweise innerhalb dieser Rotorausnehmung angeordnet.

Unter axial ist im Wesentlichen die Erstreckung in Richtung der Rotationsachse der Kupplungseinrichtung zu verstehen. Unter axial innerhalb dieser Rotorausnehmung ist zu verstehen, dass die Kupplungseinrichtung in axialer Richtung im Wesentlichen nicht über die Rotorausnehmung dieser Rotoreinrichtung hinausragt. In einer bevorzugten Ausführungsform können Bereiche der Kupplungseinrichtung, welche in axialer Richtung außerhalb dieser Rotorausnehmung liegen, eine radial größere Erstreckung aufweisen als die Rotorausnehmung. Vorzugsweise weisen Bereiche der Kupplungseinrichtung, welche axial außerhalb dieser Rotorausnehmung liegen, in radialer Richtung keine größere Erstreckung auf als diese Rotorausnehmung.

In einer bevorzugten Weiterbildung der Antriebsvorrichtung ist der mechanische Energiespeicher der Betätigungseinrichtung der Antriebsvorrichtung bezogen auf die Rotationsachse der Rotoreinrichtung des Rotor der Sekundärantriebsmaschine axialfest gelagert, wobei diese Lagerung den Energiespeicher im wesentlichen radial in einen inneren und einen äußeren Abschnitt einteilt, und wobei das Verhältnis der radialen Längen dieses inneren und dieses äußeren Abschnittes vorzugsweise kleiner als 4 : 1, besonders bevorzugt kleiner als 3 : 1 ist.

Im Rahmen dieser Patentanmeldung wird ein Verfahren zum Betrieb einer Antriebsvorrichtung für Kraftfahrzeuge vorgeschlagen.

In einem ersten Schritt des Verfahrens werden mittels der Steuereinrichtung Werte von Parametern erfasst, welche den Betriebszustand der Antriebsvorrichtung charakterisieren, erfasst, insbesondere mittels Erfassungseinrichtungen, die mit der Steuereinrichtung verbundenen sind, wie beispielsweise Erfassungseinrichtungen für Bedienbefehle des Nutzers des Kraftfahrzeuges und/oder zu übertragende und/oder übertragene Drehmomente.

Solche Parameter zum Betriebszustand der Antriebsvorrichtung sind beispielsweise Geschwindigkeit des Fahrzeugs, Umdrehungszahlen der Antriebsvorrichtung und ihrer Einrichtungen und Elemente, Ladezustände von Energiespeichern des Fahrzeugs, insbesondere Tank und/oder Batterien sowie Fahrverhalten des Nutzers, insbesondere Bedienbefehle des Nutzers.

Bedienbefehle des Nutzers sind dabei vorzugsweise Bedienbefehle, welche beim Führen eines Kraftfahrzeuges getätigt werden, insbesondere Bedienbefehle mittels Kupplungspedal, Gaspedal, Bremspedal, Lenkrad oder Schalteinrichtung des Kraftfahrzeuges.

Das zu übertragende Drehmoment resultiert aus dem Betriebszustand der Antriebsvorrichtung. Dieser Betriebszustand wird insbesondere beeinflusst durch das an der Primärantriebswelle anliegende Drehmoment, durch das am Rotor der Sekundärantriebsmaschine anliegende Drehmoment und durch den Schaltzustand der Kupplungseinrichtung.

Der Schaltzustand der Kupplungseinrichtung beeinflusst im Wesentlichen, ob Drehmoment von der Primärantriebswelle an die Abtriebseinrichtung übertragen wird. Ist dies der Fall, wird von einem geschlossenen Schaltzustand gesprochen; ist dies nicht oder nur unwesentlich der Fall, wird von einem offenen Schaltzustand gesprochen. In einer bevorzugten Weiterbildung wird im geschlossenen Schaltzustand der Kupplungseinrichtung insbesondere erfasst, ob das gesamte Drehmoment der Primärantriebswelle und des Sekundärantriebselements der Sekundärantriebsmaschine übertragen wird, oder nur ein Teil hiervon.

In einem zweiten Schritt des Verfahrens wird die Drehmomentübertragung abhängig von den erfassten Werten, welche für den Betriebszustand der Antriebsvorrichtung charakterisierend sind, wie insbesondere bei entsprechenden Bedienbefehlen des Nutzers, durch Aufbringen einer Zugkraft zwischen der wenigstens einen Eingangseinrichtung und der wenigstens einen Ausgangseinrichtung der Kupplungseinrichtung mittels des Aktors der Betätigungseinrichtung gelöst. Diese Lösung der Drehmomentübertragung wird vorzugsweise mittels der Steuereinrichtung ausgelöst.

In einem dritten Schritt des Verfahrens wird die Drehmomentübertragung abhängig von den erfassten Werten, welche für den Betriebszustand der Antriebsvorrichtung charakterisierend sind, wie insbesondere bei entsprechenden Bedienbefehlen des Nutzers, durch Aufbringen einer ersten Anpresskraft zwischen der wenigstens einen Eingangseinrichtung und der wenigstens einen Ausgangseinrichtung der Kupplungseinrichtung mittels der Betätigungseinrichtung hergestellt. Bevorzugt wird in diesem Schritt mittels der Steuereinrichtung erfasst, ob das gesamte zu übertragende Drehmoment tatsächlich über die Kupplungseinrichtung übertragen wird. Besonders bevorzugt nur in diesem Fall wird mittels der Steuereinrichtung der vierte Schritt des Verfahrens ausgelöst, falls nicht das gesamte zu übertragende Drehmoment übertragen wird.

Unter einer ersten Anpresskraft wird eine Anpresskraft verstanden, welche im Wesentlichen durch den mechanischen Energiespeicher der Betätigungseinrichtung der Kupplungseinrichtung aufgebracht wird.

In einem vierten Schritt des Verfahrens wird bei Eintreten eines in der Steuereinrichtung hinterlegten Betriebszustandes der Antriebsvorrichtung, der abhängig von den erfassten, den Betriebszustand der Antriebsvorrichtung charakterisierend, Werten ist, mittels des Aktors der Betätigungseinrichtung eine zweite Anpresskraft zwischen der wenigstens einen Eingangseinrichtung und der wenigstens einen Ausgangseinrichtung der Kupplungseinrichtung aufgebracht, wobei das Aufbringen der zweiten Anpresskraft zu einer Erhöhung des durch die Kupplungsvorrichtung übertragbaren Drehmoments führt.

Unter einer zweiten Anpresskraft wird eine Anpresskraft verstanden, welche im Wesentlichen durch Aktor der Betätigungseinrichtung der Kupplungseinrichtung aufgebracht wird.

In einer bevorzugten Weiterbildung des Verfahrens zum Betrieb einer Antriebsvorrichtung für Kraftfahrzeuge ist ein in der Steuereinrichtung hinterlegter Betriebszustand der Antriebsvorrichtung aus Bedienbefehlen des Nutzers mittels der Steuereinrichtung ableitbar, wobei bei einem Eintreten dieses Betriebszustandes eine konstante zweite Anpresskraft zwischen der wenigstens einen Eingangseinrichtung und der wenigstens einen Ausgangseinrichtung der Kupplungseinrichtung aufgebracht wird. Vorzugsweise wird dadurch das übertragbare Drehmoment erhöht, wobei insbesondere eine nur teilweise Übertragung des zu übertragenden Drehmomentes vermieden wird.

In einer bevorzugten Weiterbildung des Verfahrens zum Betrieb einer Antriebsvorrichtung für Kraftfahrzeuge wird ein in der Steuereinrichtung hinterlegter Betriebszustand durch Überschreiten eines Schwellenwertes eines Wertes eines den Betriebszustand charakterisierenden Parameters, insbesondere des erfassten, zu übertragenden Drehmoments erreicht. Dieser Schwellenwert wird durch ein in der Steuereinrichtung hinterlegtes Kennfeld festgelegt, welches den funktionalen Zusammenhang zwischen übertragbarem Drehmoment der Kupplungseinrichtung und aufgebrachter Anpresskraft der Betätigungseinrichtung wiedergibt. Vorzugsweise weist dieses Kennfeld einen Schwellenwert für einen Parameter, wie insbesondere des zu übertragenden Drehmoments auf. Weiter vorzugsweise weist dieses Kennfeld mehrere Schwellenwerte auf. Weiter vorzugsweise weist dieses Kennfeld eine Vielzahl von Schwellenwerten auf. In dieser bevorzugten Weiterbildung des Verfahrens wird bei jedem Erreichen eines hinterlegten Schwellenwertes die aufgebrachte zweite Anpresskraft wie im Kennfeld hinterlegt angepasst.

Es können auch mehrere der oben beschriebenen Weiterbildungen - soweit dies technisch möglich ist - beliebig miteinander kombiniert werden.

Beispielhafte Ausführungen der Antriebsvorrichtung für Kraftfahrzeuge ergeben sich aus den nachfolgenden Beschreibungen in Zusammenhang mit den Figuren, welche im einzelnen zeigen:
- Fig. 1:: eine beispielhafte Ausführung der Antriebsvorrichtung für Kraftfahrzeuge mit einer Zweischeibenkupplung als Kupplungseinrichtung;
- Fig. 2:: eine weitere beispielhafte Ausführung der Antriebsvorrichtung für Kraftfahrzeuge mit einer Freilauftrennkupplungseinrichtung als Kupplungseinrichtung

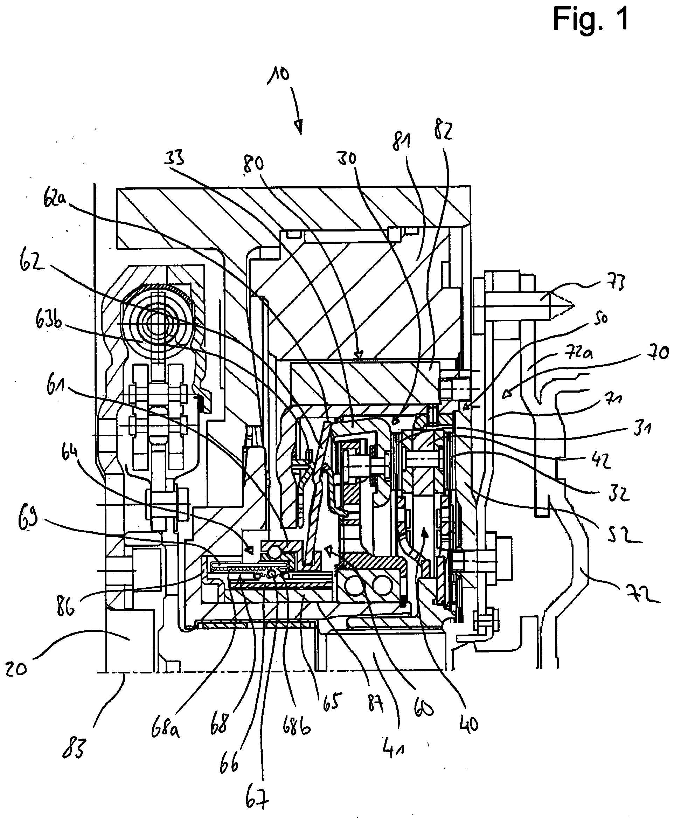

Fig. 1 zeigt eine beispielhafte Ausführung der Antriebsvorrichtung für Kraftfahrzeuge. Die Primärantriebsmaschine, insbesondere eine Verbrennungskraftmaschine, ist nicht dargestellt. Die mit der Antriebsleistung der Primärantriebsmaschine, insbesondere in Form eines Drehmomentes, beaufschlagte Primärantriebswelle 20 ist im Wesentlichen drehfest, insbesondere über eine Drehmoment-Dämpfungseinrichtung 25, mit der Welle 41 der Eingangseinrichtung 40 verbunden und überträgt dadurch die Antriebsleistung der Primärantriebsmaschine auf diese Eingangseinrichtung 40. Diese Welle 41 der Eingangseinrichtung 40 ist drehfest mit wenigstens einem Eingriffselement 42 der Eingangseinrichtung verbunden, an welchem somit ebenfalls die Antriebsleistung der Primärantriebsmaschine anliegt.

Im dargestellten, geschlossenen Zustand der Zweischeibenkupplung 30 wird die Antriebsleistung der Primärantriebsmaschine, insbesondere durch Reibschluss über eine Druckplatte 33 und ein erstes Kupplungselement 31, insbesondere eine Kupplungsscheibe, auf ein zweites Kupplungselement 32, insbesondere eine Kupplungsscheibe, übertragen. Vom zweiten Kupplungselement 32 erfolgt eine Übertragung der Antriebsleistung auf ein Ausgangselement 52 der Ausgangseinrichtung 50, welches vorzugsweise drehfest mit dem Rotor 82 der Sekundärantriebsmaschine 80 verbunden ist.

Der Rotor 82 der Sekundärantriebsmaschine 80 befindet sich dabei vorzugsweise in einem im Wesentlichen passiven Betriebszustand, in welchem er zur Übertragung der Antriebsleistung der Primärantriebsmaschine mitrotiert wird.

Weiter vorzugsweise befindet sich der Rotor 82 der Sekundärantriebsmaschine 80 in einem aktiven Betriebszustand, in welchem der Stator 81 und/oder der Rotor 82 bestromt sind, wodurch die Sekundärantriebsmaschine 80 eine elektrische Antriebsleistung zur Antriebsleistung der Primärantriebsmaschine beiträgt, welche über das drehfest am Rotor angebrachte Ausgangselement 52 an die Ausgangseinrichtung 50 übertragen wird.

Im geöffneten Zustand der Zweischeibenkupplung 30 ist eine Drehmomentübertragung von der Primärantriebsmaschine zur Abtriebseinrichtung 50 im Wesentlichen ausgeschlossen. Vorzugsweise wird im geöffneten Zustand der Zweischeibenkupplung 30 Antriebsleistung der Sekundärantriebsmaschine 80 zur Abtriebseinrichtung übertragen. Weiter vorzugsweise wird die Sekundärantriebsmaschine 80 in diesem Zustand im Leerlauf betrieben. Weiter vorzugsweise wird die Sekundärantriebsmaschine 80 in diesem Zustand als Generator, insbesondere zum Laden von im Fahrzeug verbauten elektrochemischen Speicherzellen oder zur Energieversorgung im Fahrzeug verbauter elektrischer Verbraucher betrieben.

Das Herstellen und Lösen einer Übertragung von Antriebsleistung der Primärantriebsmaschine erfolgt mittels der Zweischeibenkupplung 30 der Antriebsvorrichtung 10. Unterschiedliche Schaltzustände der Zweischeibenkupplung 30 werden dabei insbesondere mittels der nicht dargestellten Steuereinrichtung gesteuert und mittels der Betätigungseinrichtung 60 der Zweischeibenkupplung 30 aktuiert.

Das Öffnen der Zweischeibenkupplung 30, und somit insbesondere das Lösen der Übertragung des Drehmoments des Primärantriebs, erfolgt durch eine axiale Bewegung des Ausrückers 61 der Betätigungseinrichtung in Richtung der Abtriebseinrichtung. Durch diese Bewegung wird die Tellerfeder 62 an ihrer ersten Lagerstelle 63a derart umgelenkt, dass das radial entfernte Ende 62a der Tellerfeder 62 im Wesentlichen keine Anpresskraft mehr auf die Druckplatte 33 aufbringen kann, wobei die drehfeste Verbindung zwischen dem Eingangselement 41 und den Kupplungselementen 31 und 32 und dem Ausgangselement 52 der Ausgangseinrichtung 50 gelöst wird, wodurch im Wesentlichen kein Drehmoment mehr von der Primärantriebsmaschine übertragen werden kann.

Die zum Umlenken der Tellerfeder nötige Axialkraft in Richtung der Abtriebseinrichtung wird durch den Aktor 64 der Betätigungseinrichtung 60 aufgebracht, wobei dieser Aktor als elektromechanischer Axialantrieb wie aus der DE 100 33 649 A1 bekannt ausgeführt ist. Dieser stützt sich radial am Gehäuse 85 der Sekundärantriebsmaschine 80 mit seinem Aktor-Stator 65 ab, um dessen äußeren Umfang der Aktor-Rotor 66 angebracht ist. Die axiale Abstützung erfolgt vorzugsweise über das Abstützelement 86 am Gehäuse 85. Weiter vorzugsweise erfolgt die axiale Abstützung über einen Pressverband 87 zwischen dem Aktor-Stator 65 und dem Gehäuse 85. Eine axiale Bewegung und Kraft wird erzeugt, wenn der Aktor-Stator 65 und/oder der Aktor-Rotor 66 bestromt werden, und sich dadurch der Aktor-Rotor 66 gegenüber dem Rotor-Stator 65 in Umfangsrichtung dreht, wobei ein mit dem Aktor-Rotor 66 drehfest und axialfest verbundenes Eingriffsmittel 67 einen Federdraht 68, insbesondere eine Schraubfeder, in zwei Abschnitte 68a und 68b, insbesondere zwei Windungspakete, teilt, deren Längenverhältnis in Axialrichtung sich bei einem Verdrehen von Aktor-Rotor 66 gegenüber Aktor-Stator 65 ändert. Der drehfest mit dem Federdraht 68 angebrachte Aktor-Schlitten 69 verfährt in diesem Fall axial in Richtung der Abtriebseinrichtung und kann in diese Richtung eine Axialkraft aufbringen, welche mittels dem Ausrücker 61 auf die Tellerfeder 62 übertragen wir, was zu einem Ausrücken der Kupplung und so zu einer Unterbrechung der Drehmomentübertragung führt.

Das Schließen der Zweischeibenkupplung 30, und somit insbesondere das Herstellen der Übertragung des Drehmomentes der Primärantriebsmaschine, erfolgt durch ein Verfahren des Aktors 64 der Betätigungseinrichtung 60 axial in Richtung der Primärantriebswelle 20, und wird unterstützt durch aus der Tellerfeder 62 aufgrund gespeicherter mechanischer Federenergie abrufbarem Moment, wobei die Tellerfeder 62 an ihrer zweiten Lagerstelle 63b derart umgelenkt wird, dass das radial entfernte Ende 62a der Tellerfeder 62 eine Anpresskraft auf die Druckplatte 33 aufbringen kann, wobei eine drehfeste Verbindung zwischen dem Eingangselement 41 und den Kupplungselementen 31 und 32 und dem Ausgangselement 52 der Ausgangseinrichtung 50 hergestellt wird, wodurch Drehmoment von der Primärantriebsmaschine übertragen werden kann.

Vorzugsweise kann durch dieses Schließen der Zweischeibenkupplung 30 das gesamte Drehmoment der Primärantriebsmaschine übertragen werden. Weiter vorzugsweise kann durch dieses Schließen der Zweischeibenkupplung 30 ein Teil des Drehmoments der Primärantriebsmaschine übertragen werden.

Abhängig von der Leistung der Primärantriebsmaschine kann durch dieses Schließen der Zweischeibenkupplung 30 das gesamte Drehmoment der Primärantriebsmaschine übertragen werden. Bei sehr hoher Leistung der Primärantriebsmaschine ist es möglich, dass durch dieses vorhergehend beschriebene Schließen der Zweischeibenkupplung 30 nur ein Teil des gesamten Drehmoments der Primärantriebsmaschine übertragen werden kann.

Bei der dargestellten beispielhaften Ausführungsform ist im dargestellten, geschlossenen Zustand der Zweischeibenkupplung 30 mittels dem Aktor 64 der Betätigungseinrichtung 60 eine, der Anpresskraft der Tellerfeder 62 im Wesentlichen überlagerte, zweite Anpresskraft aufbringbar.

Dazu wird der Aktor 64 nach dem erfolgten Schließen der Zweischeibenkupplung 30 weiterhin bestromt. Die dabei in den Aktor eingebrachte, elektrische Energie wird in eine axiale Kraft in Richtung der Primärantriebswelle 20 umgesetzt, wobei durch die nicht unendliche Steifigkeit der Elemente der Betätigungseinrichtung 60 ein weiteres Verfahren des Ausrückers 61 um wenige Millimeter erfolgen kann. Die aufgebrachte axiale Kraft in Richtung der Primärantriebswelle 20 wird über die zweite Lagerstelle 63b durch die Tellerfeder 62 in eine axiale, zweite Anpresskraft in Richtung der Abtriebseinrichtung 70 umgelenkt und über die Druckplatte 33 und die Kupplungselemente 31 und 32 auf das Eingangselement 41 und das Ausgangselement 52 der Ausgangseinrichtung 50 aufgebracht.

In einem bevorzugten Ausführungsbeispiel ist die Bestromung zum Aufbringen der zweiten Axialkraft identisch mit derjenigen zum Schließen der Zweischeibenkupplung 30 mittels des Aktors 64. In einem weiteren Ausführungsbeispiel ist diese Bestromung konstant und niedriger als diejenige zum Schließen der Zweischeibenkupplung 30 mittels des Aktors 64. In einem weiteren Ausführungsbeispiel ist diese Bestromung konstant und höher als diejenige zum Schließen der Zweischeibenkupplung 30 mittels des Aktors 64. In einem weiteren Ausführungsbeispiel ist diese Bestromung variabel.
Das Aufbringen einer zweiten Anpresskraft durch den Aktor 64, und somit dessen Bestromung, sowie die Höhe der aufgebrachten zweiten Anpresskraft, ist von den mittels der Steuereinrichtung erfassten Betriebsparametern der Antriebsvorrichtung 10 abhängig. Bevorzugt wird eine zweite Anpresskraft aufgebracht, wenn aufgrund der Ausprägung der erfassten Betriebsparameter der Antriebsvorrichtung 10 davon auszugehen ist, dass bei einer erwarteten Weiterentwicklung dieser Betriebsparameter ohne zweite Anpresskraft nicht das gesamte zu übertragende Drehmoment übertragen werden kann. Besonders bevorzugt wird eine zweite Anpresskraft aufgebracht, wenn die Ausprägung der erfassten Betriebsparameter der Antriebsvorrichtung 10 zeigt, dass im aktuellen Betriebszustand ohne zweite Anpresskraft nicht das gesamte zu übertragende Drehmoment übertragen werden kann. In einer weiteren Anwendungsmöglichkeit kann beim Ausführungsbeispiel das Aufbringen der beispielsweise maximal möglichen zweiten Anpresskraft mittels des Aktors 64 der Betätigungseinrichtung 60 immer dann vorgesehen werden, wenn mittels der Steuereinrichtung ein Schließen der Zweischeibenkupplung 30 aktuiert wird, auch unabhängig von der Höhe des zu übertragenden Drehmoments.

Die Höhe der aufzubringenden zweiten Anpresskraft hängt von der Differenz zwischen übertragbarem und zu übertragendem Drehmoment ab, wobei diese Differenz mittels des Steuergeräts auf Basis der erfassten Betriebsparameter der Antriebsvorrichtung 10 ermittelt wird.
Das von den verschiedenen Betriebszuständen der Primärantriebsmaschine, der Sekundärantriebsmaschine 80 und der Zweischeibenkupplung 30 abhängige, an der Ausgangseinrichtung 50 anliegende, Drehmoment wird durch eine, im Wesentlichen drehfeste, Verbindung auf die Abtriebseinrichtung 70 der Antriebsvorrichtung 10 übertragen, wobei die Abtriebsvorrichtung in dieser beispielhaften Ausführung als Flexplatte 71 mit drehfest verbundenem, angeflanschten Wandlergehäuse 72, dargestellt ist.
Die in diesem Ausführungsbeispiel verwendete Flexplatte 71 der Abtriebseinrichtung 70 erstreckt sich im Wesentlichen radial von der Rotationsachse 83 der Sekundärantriebsmaschine 80, und ist durch mehrere Schrauben 73 an ein Flanschelement 72a des Wandlergehäuses 72 angeflanscht, wobei die Schrauben 73 aus Richtung der Antriebsvorrichtung 10 im Wesentlichen axial zur Rotationsachse 83 der Sekundärantriebsmaschine 80 eingeschraubt werden, und wobei sich das Flanschelement 72a des Wandlergehäuses 72 im Wesentlichen radial von der Rotationsachse 83 der Sekundärantriebsmaschine 80 erstreckt.

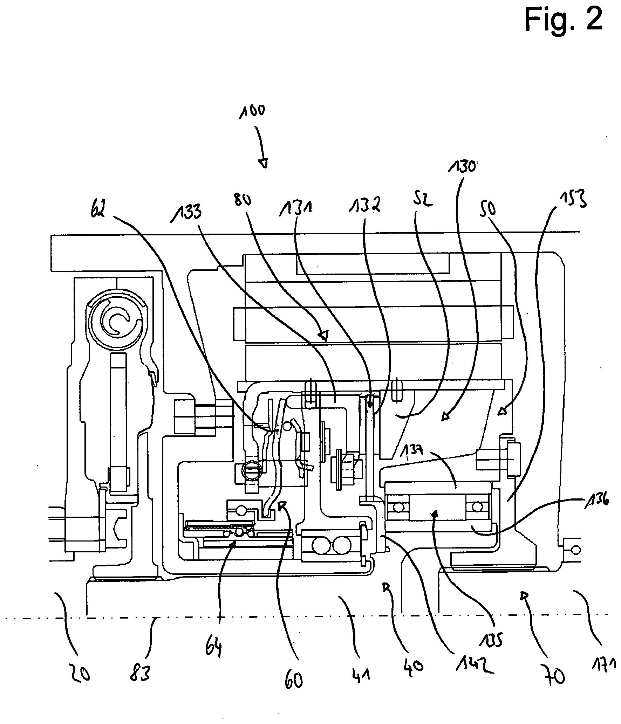

Fig. 2 zeigt eine weitere beispielhafte Ausführung einer Antriebsvorrichtung für Kraftfahrzeuge 100. Das hier beschriebene Ausführungsbeispiel unterscheidet sich von dem in Fig. 1 beschriebenen Ausführungsbeispiel in der Verwendung einer Freilauftrennkupplung 130 anstatt einer Zweischeibenkupplung. Die im Vergleich zu Fig. 1 unterschiedlichen Merkmale werden nachfolgend beschrieben, wobei im Wesentlichen gleiche Elemente der Antriebsvorrichtung 100 mit den gleichen Bezugszeichen wie die entsprechenden Elemente der Antriebsvorrichtung 10 in Fig. 1 bezeichnet werden.

Die in der Antriebsvorrichtung 100 als Kupplungseinrichtung verwendete Freilauftrennkupplungseinrichtung 130 weist eine Reibtrennkupplung 131 und eine Freilaufkupplung 135 auf, die bezüglich des Kraft- und Momentenflusses parallel angeordnet sind.

Ein erster Betriebszustand der Antriebsvorrichtung 100 ist gekennzeichnet durch eine Drehmomentübertragung von der Primärwelle 20 des Verbrennungsmotors an die Abtriebseinrichtung 70. Dieser Betriebszustand tritt insbesondere ein, wenn die Primärantriebsmaschine des Fahrzeugs wenigstens einen Anteil des zum Antrieb nötigen Drehmoments aufbringt. Dabei wird wahlweise mittels der Sekundärantriebsmaschine 80 zusätzliches Drehmoment aufgebracht.

Die Steuereinrichtung der Antriebsvorrichtung 100 ermittelt das an der Welle 41 anliegende Drehmoment der Primärantriebsmaschine, insbesondere unter Verwendung erfasster Parameter zur Drosselklappenstellung, zur Motordrehzahl, zur dem Motor zugeführten Luftmenge, zum Einspritzverhältnis, zur Drehmomentabgabe der Primärantriebsmaschine, zur Torsionsverformung von Antriebskomponenten und/oder zu Nutzereingaben. Anschließend wird das ermittelte, an der Welle 41 anliegende Drehmoment verglichen mit dem mittels der Freilauftrennkupplungseinrichtung 130 übertragbaren Drehmoment.

Solange das mittels Steuereinrichtung ermittelte zu übertragende Drehmoment niedriger ist als eine in der Steuereinrichtung hinterlegte Drehmoment-Belastungsgrenze der Freilaufkupplung 135, erfolgt die Drehmomentübertragung im Wesentlichen über die Freilaufkupplung 135. Die Antriebsvorrichtung 100 überträgt dabei mittels der Freilaufkupplung 135 der Freilauftrennkupplungseinrichtung 130 das an der Welle 41 anliegende Antriebsdrehmoment von der Eingangseinrichtung 40 über die radial innere Abstützung 136 an die radial äußere Abstützung 137 der Freilaufkupplung 135, welche drehfest mit dem Ausgangsübertragungselement 153 der Ausgangseinrichtung 50 verbunden ist.

Insbesondere wenn im beschriebenen Betriebszustand hohe Drehmomente zu übertragen sind, beispielsweise bei Volllastbetrieb der Primärantriebsmaschine oder bei Volllast beider Antriebsmaschinen, kann durch die Steuereinrichtung eine zusätzliche Drehmomentübertragung mittels der Reibtrennkupplung 131 aktuiert werden. Dies erfolgt beispielsweise, nachdem die Steuereinrichtung eine bevorstehende Überlastung der Freilaufkupplung auf Basis der erfassten Parameter ermittelt hat.

Ein mittels der Steuereinrichtung über die Steuerung des Aktors 64 bestimmter Anteil des an der Welle 41 der Eingangseinrichtung 40 anliegenden Drehmoments wird dabei an ein drehfest mit der Welle 41 verbundenes Übertragungselement 142 der Eingangseinrichtung 40 übertragen. Dieses Übertragungselement 142 ist mit dem Reibkupplungselement 132 der Reibtrennkupplung 131, insbesondere einer Kupplungsscheibe, drehfest verbunden, so dass der auf diesem Wege übertragene Anteil des Drehmoments ebenfalls an dem Reibkupplungselement 132 anliegt und über dieses an das Ausgangselement 52 der Ausgangseinrichtung 50 übertragen wird, wenn die Betätigungseinrichtung 60 der Reibtrennkupplung 131 die benötigte Anpresskraft zwischen dem Reibkupplungselement 132 und dem Ausgangselement 52 aufbringt.

Die Höhe des dabei mittels der Reibtrennkupplung 131 übertragenen Drehmomentanteils wird gesteuert unter Verwendung der Steuereinrichtung. Die Steuereinrichtung veranlasst ein Verfahren des Aktors 64 der Betätigungseinrichtung 60 in Richtung der Primärantriebsmaschine, wodurch die Tellerfeder 62 die benötigte Anpresskraft zur Übertragung des Drehmomentanteils aufbringt.

Durch die parallele Aufteilung des zu übertragenden Drehmomentes auf die beiden Kupplungen 131 und 135 der Freilauftrennkupplungseinrichtung 130 kann eine vollständige Übertragung des antriebsmaschinenseitigen Drehmoments an das Ausgangsübertragungselement 153 der Ausgangseinrichtung 50 der Freilauftrennkupplungseinrichtung 130 sichergestellt werden.

Das Ausgangsübertragungselement 153 ist, beispielsweise über eine Verzahnung, drehfest mit der Abtriebswelle 171 der Abtriebseinrichtung 70 verbunden, wobei durch diese Verbindung das zu übertragende Drehmoment an die Abtriebswelle 171 übertragen wird, von wo es weiter im Antriebsstrang des Kraftfahrzeuges verteilt wird.

Ein weiterer Betriebszustand der Antriebsvorrichtung 100 ist gekennzeichnet durch eine Drehmomentübertragung von der Abtriebseinrichtung 70 und/oder von der Sekundärantriebsmaschine 80 an die Primärantriebswelle 20 der Primärantriebsmaschine. Dieser Betriebszustand tritt insbesondere dann ein, wenn der Verbrennungsmotor aus einem Zustand des elektrischen Fahrens oder aus dem Stillstand des Fahrzeuges heraus gestartet werden soll, insbesondere zur Befriedigung eines zusätzlichen Drehmomentbedarfs des Kraftfahrzeugs.

Die Ermittlung eines derartigen Betriebszustandes erfolgt mittels der Steuereinrichtung der Antriebsvorrichtung 100, welche dazu erfasste Betriebsparameter auswertet, insbesondere zur Motordrehzahl der Primärantriebsmaschine und/oder zu Nutzereingaben. Ferner ermittelt die Steuereinrichtung ein zum Start der Primärantriebsmaschine notwendiges Drehmoment, insbesondere unter Auswertung erfasster Parameter zur Temperatur der Primärantriebsmaschine und/oder ihrer Komponenten.

Wenn mittels der Steuereinrichtung ein derartiger Betriebszustand ermittelt ist, überträgt die Antriebsvorrichtung 100 mittels der Reibtrennkupplung 131 der Freilauftrennkupplungseinrichtung 130 das an der Sekundärantriebsmaschine 80 und/oder an der Abtriebseinrichtung 70 anliegende Drehmoment an die Welle 41 und an die damit im Wesentlichen drehfest verbundene Primärantriebswelle 20 sowie die Primärantriebsmaschine.

Dabei ist insbesondere die Übertragung von Drehmoment aus einem Einsatz der Sekundärantriebsmaschine 80 als Starter für die Primärantriebsmaschine, sowie die Übertragung von Drehmoment aus einem Schubbetrieb des straßenseitigen Antriebsstrangs zum Starten der Primärantriebsmaschine vorgesehen.

Insbesondere ist auch eine kombinierte Übertragung von Drehmomenten aus der Sekundärantriebsmaschine 80 und dem straßenseitigen Antriebsstrang vorgesehen.

Eine Drehmomentübertragung zur Primärantriebsmaschine ist ebenfalls vorgesehen, wenn eine Batterieeinrichtung, welche über die Sekundärantriebsmaschine 80 aufladbar ist, keine Energie aufnehmen und daher insbesondere kein Verzögerungsmoment zum Abbremsen des Kraftfahrzeuges bereit stellen kann.

Das zu übertragende Drehmoment liegt dabei am Ausgangselement 52 der Ausgangseinrichtung 50 an. Mittels der Steuereinrichtung wird der Aktor 64 der Betätigungseinrichtung 60 axial in Richtung der Primärantriebsmaschine verfahren. Dadurch bringt die Tellerfeder 62 eine Anpresskraft zwischen der Druckplatte 133, dem Reibkupplungselement 132 und dem Ausgangselement 52 auf.

Diese Anpresskraft ist unter bestimmten Betriebsbedingungen ausreichend, um eine drehfeste Verbindung des Ausgangselements 52 mit der Welle 41 herzustellen, insbesondere wenn die Primärantriebsmaschine eine Temperatur im Bereich ihrer optimalen Betriebstemperatur erreicht hat. Damit ist eine Übertragung des unter diesen Betriebsbedingungen zu übertragenden Drehmoments von 80-120 Nm sichergestellt.

Unter anderen Betriebsbedingungen, insbesondere wenn die Primärantriebsmaschine in einer niedrigen Betriebstemperatur, d.h. kalt, gestartet werden soll, beispielsweise nach längerem Stillstand, kann das allein mittels der Reibtrennkupplung 131 der Freilauftrennkupplungseinrichtung 130 aufbringbare Drehmoment unzureichend sein. Derartige Betriebsbedingungen können beispielsweise auftreten, wenn der Verbrennungsmotor aus einem längeren Zustand des elektrischen Fahrens oder aus einem Zustand des elektrischen Fahrens kurz nach einem längeren Stillstand des Fahrzeugs oder aus einem längeren Stillstand des Fahrzeuges heraus gestartet werden soll. Das Startmoment der kalten Primärantriebsmaschine erreicht dann bis zu 300 Nm, und kann damit höher sein als das allein mittels der Reibtrennkupplung 131 übertragbare Drehmoment.

Wenn mittels der Steuereinrichtung derartige Betriebsbedingungen ermittelt sind, wird mittels der Steuereinrichtung der bereits axial in Richtung der Primärantriebsmaschine verfahrene Aktor 64 der Betätigungseinrichtung 60 derart bestromt, dass er axial zur Rotationsachse der Primärantriebsmaschine 83 in Richtung der Primärantriebsmaschine eine Kraft aufbringt, wobei durch die nicht unendliche Steifigkeit der Elemente der Betätigungseinrichtung 60 ein weiteres Verfahren des Ausrückers 61 um wenige Millimeter erfolgen kann. Dabei wird mittels der Tellerfeder 62 eine zusätzliche, zweite Anpresskraft auf die Reibtrennkupplung 131 der Freilauftrennkupplungseinrichtung 130 ausgeübt, wodurch das mittels der Reibtrennkupplung 131 übertragbare Drehmoment steigt, und insbesondere ausreicht, um die Primärantriebsmaschine auch im kalten Zustand zu starten.

Die Höhe der dabei aufgebrachten zusätzlichen Anpresskraft wird durch die Bestromung des Aktors 64 bestimmt, welche mittels der Steuereinrichtung eingestellt wird, wobei erfasste Parameter zum Betriebszustand mit wenigstens einem, für die Steuereinrichtung zugreifbar hinterlegten, Kennfeld verglichen werden. Aus diesen Vergleichen werden mittels der Steuereinrichtung Entscheidungen zur geeigneten Bestromung des Aktors 64 abgeleitet.

### Bezugszeichenliste

- 10: Antriebsvorrichtung für Kraftfahrzeuge
- 100: Antriebsvorrichtung für Kraftfahrzeuge
- 20: Primärantriebswelle

- 30: Zweischeibenkupplung
- 31: erstes Kupplungselement der Zweischeibenkupplung
- 32: zweites Kupplungselement der Zweischeibenkupplung
- 33: Druckplatte der Zweischeibenkupplung
- 130: Freilauftrennkupplungseinrichtung
- 131: Reibtrennkupplung der Freilauftrennkupplungseinrichtung
- 132: Reibkupplungselement der Reibtrennkupplung
- 133: Druckplatte der Reibtrennkupplung
- 135: Freilaufkupplung der Freilauftrennkupplungseinrichtung
- 136: radial innere Abstützung der Freilaufkupplung
- 137: radial äußere Abstützung der Freilaufkupplung

- 40: Eingangseinrichtung der Kupplungseinrichtung
- 41: Welle der Eingangseinrichtung
- 42: Eingriffselement der Eingangseinrichtung
- 142: Übertragungselement der Eingangseinrichtung

- 50: Ausgangseinrichtung der Kupplungseinrichtung
- 52: Ausgangselement der Ausgangseinrichtung
- 153: Ausgangsübertragungselement der Ausgangseinrichtung

- 60: Betätigungseinrichtung der Kupplungseinrichtung
- 61: Ausrücker
- 62: Tellerfeder
- 62a: radial entferntes Ende der Tellerfeder
- 63a: erste Lagerstelle der Tellerfeder
- 63b: zweite Lagerstelle der Tellerfeder
- 64: Aktor der Betätigungseinrichutng
- 65: Aktor-Stator
- 66: Aktor-Rotor
- 67: Eingriffsmittel
- 68: Federdraht
- 68a: erster Abschnitt des Federdrahts
- 68b: zweiter Abschnitt des Federdrahts
- 69: Schlitten des Aktors

- 70: Abtriebseinrichtung
- 71: Flexplatte
- 72: Wandlergehäuse
- 72a: Flanschelement des Wandlergehäuses
- 73: Schraube
- 171: Abtriebswelle

- 80: Sekundärantriebsmaschine
- 81: Stator der Sekundärantriebsmaschine
- 82: Rotor der Sekundärantriebsmaschine
- 83: Rotationsachse der Sekundärantriebsmaschine
- 85: Gehäuse der Sekundärantriebsmaschine
- 86: Abstützelement des Gehäuses
- 87: Pressverband

## Patentansprüche

1. Antriebsvorrichtung (10, 100) für Kraftfahrzeuge, die aufweist:
eine Primärantriebsmaschine mit einer Primärantriebswelle (20),
eine Sekundärantriebsmaschine (80) mit einem Sekundärantriebselement,
eine Kupplungseinrichtung (30, 130) mit einer Eingangseinrichtung (40), welche mit der Primärantriebswelle (20) drehfest verbunden ist, einer Ausgangseinrichtung (50), welche sowohl mit dem Sekundärantriebselement als auch mit der Abtriebseinrichtung (70) drehfest verbunden ist und mit welcher wahlweise das Drehmoment der Primärantriebsmaschine oder der Sekundärantriebsmaschine (80) übertragbar ist, einem Kupplungselement (31, 131), welches dafür vorgesehen ist, das Drehmoment der Eingangseinrichtung (40) zu übertragen, und einer Betätigungseinrichtung (60) zum Herstellen und Lösen einer drehfesten Verbindung zwischen der Eingangseinrichtung (40) und der Ausgangseinrichtung (50), und
eine Abtriebseinrichtung (70), wobei
die Betätigungseinrichtung (60) einen mechanischen Energiespeicher (62) aufweist, welcher dafür vorgesehen ist, zum Herstellen der Drehmomentübertragung in der Kupplungsvorrichtung (30, 130) eine erste Anpresskraft zwischen der Eingangseinrichtung (40) und der Ausgangseinrichtung (50) aufzubringen,
**dadurch gekennzeichnet, dass**
die Betätigungseinrichtung (60) einen Aktor (64) aufweist, welcher dafür vorgesehen ist, eine der ersten Anpresskraft des mechanischen Energiespeichers (62) überlagerte zweite Anpresskraft zwischen der Eingangseinrichtung (40) und der Ausgangseinrichtung (50) aufzubringen,
eine Höhe der zweiten Anpresskraft von einer Differenz zwischen einem übertragbaren und einem zu übertragenem Drehmoment abhängt, und
eine Steuereinrichtung auf Basis von erfassten Betriebsparametern der Antriebsvorrichtung (10, 100) die Differenz ermittelt.

2. Antriebsvorrichtung (10, 100) für Kraftfahrzeuge nachAnspruch 1, **dadurch gekennzeichnet, dass** der Aktor (64) als elektromechanischer Axialantrieb ausgeführt ist.

3. Antriebsvorrichtung (10, 100) für Kraftfahrzeuge nach Anspruch 2, **dadurch gekennzeichnet, dass**
der elektromechanische Axialantrieb (64) derart ausgeführt ist, dass er zwei Bauteile (65, 66) aufweist, welche zum Erzeugen einer zueinander relativen axialen Bewegung in Umfangsrichtung zueinander verdrehbar sind, und
die relative axiale Bewegung der zwei Bauteile (65, 66) zueinander durch ein Eingriffsmittel (67) verursacht wird, welches in eine mit einem der zwei Bauteile (65, 66) drehfest verbundene Schraubenfeder (68) eingreift und dadurch die Windungen der Schraubenfeder in zwei Abschnitte (68a, 68b) teilt, deren Längenverhältnis in Axialrichtung sich bei einem Verdrehen der beiden Bauteile (65, 66) ändert.

4. Antriebsvorrichtung (10, 100) für Kraftfahrzeuge nach einem der Ansprüche 1 bis 3, **dadurch gekennzeichnet, dass** der Aktor (64) als Axialantrieb mit einem fluidbetriebenen Ringkolben ausgeführt ist.

5. Antriebsvorrichtung (10, 100) für Kraftfahrzeuge nach einem der Ansprüche 1 bis 4, **dadurch gekennzeichnet, dass**
die Sekundärantriebsmaschine (80) der Antriebsvorrichtung (10, 100) als ein elektromechanischer Energiewandler ausgeführt ist, welcher eine Statoreinrichtung (65) und eine in der Statoreinrichtung (65) angeordnete, um eine Rotationsachse (83) drehbare Rotoreinrichtung (66) aufweist, welche das Sekundärantriebselement der Sekundärantriebsmaschine (80) bildet,
die Rotoreinrichtung (66) eine Rotorausnehmung aufweist, die konzentrisch zu der Rotationsachse (83) angeordnet ist, und
die Kupplungseinrichtung (30, 130) radial innerhalb der Rotorausnehmung angeordnet ist.

6. Antriebsvorrichtung (10, 100) für Kraftfahrzeuge nach Anspruch 5,
**dadurch gekennzeichnet, dass** die Kupplungseinrichtung (30, 130) entlang der Rotationsachse (83) in axialer Richtung wenigstens teilweise innerhalb der Rotorausnehmung angeordnet ist.

7. Antriebsvorrichtung (10, 100) für Kraftfahrzeuge nach einem der Ansprüche 1 bis 6, **dadurch gekennzeichnet, dass**
der mechanische Energiespeicher (62) der Betätigungseinrichtung (60) der Antriebsvorrichtung (10, 100) bezogen auf die Rotationsachse (83) des Sekundärantriebselements der Sekundärantriebsmaschine (80) axialfest gelagert ist,
die Lagerung den mechanischen Energiespeicher (62) radial in einen inneren und einen äußeren Abschnitt einteilt, und
das Verhältnis von radialen Längen des inneren und des äußeren Abschnitts kleiner als 4 : 1 ist.

8. Antriebsvorrichtung (10, 100) für Kraftfahrzeuge nach Anspruch 7, **dadurch gekennzeichnet, dass** das Verhältnis von radialen Längen des inneren und des äußeren Abschnitts kleiner als 3 : 1 ist.

## Claims

1. Drive apparatus (10, 100) for motor vehicles, which has:
a primary drive machine with a primary drive shaft (20),
a secondary drive machine (80) with a secondary drive element,
a clutch device (30, 130) with an input device (40), which is connected rotationally conjointly to the primary drive shaft (20), with an output device (50), which is connected rotationally conjointly both to the secondary drive element and to the drive-output device (70) and by means of which selectively the torque of the primary drive machine or of the secondary drive machine (80) can be transmitted, with a clutch element (31, 131), which is provided for transmitting the torque of the input device (40) and with an activating device (60), for producing and releasing a rotationally conjointly connection between the input device (40) and the output device (50), and
a drive-output device (70), wherein
the activating device (60) has a mechanical energy store (62) which is provided for imparting a first pressing force between the input device (40) and the output device (50) in order to produce the transmission of torque in the clutch device (30, 130),
**characterized in that**
the activating device (60) has an actuator (64) which is provided for imparting a second pressing force, which is superposed on the first pressing force of the mechanical energy store (62), between the input device (40) and the output device (50),
a level of the second pressing force is dependent on a difference between a transmissible torque and a torque to be transmitted, and
a control device determines the difference on the basis of detected operating parameters of the drive apparatus (10, 100).

2. Drive apparatus (10, 100) for motor vehicles according to Claim 1, **characterized in that** the actuator (64) is designed as an electromechanical axial drive.

3. Drive apparatus (10, 100) for motor vehicles according to Claim 2, **characterized in that**
the electromechanical axial drive (64) is designed so as to have two components (65, 66) which are rotatable relative to one another in a circumferential direction in order to generate a relative axial movement with respect to one another, and
the relative axial movement of the two components (65, 66) with respect to one another is caused by an engagement means (67) which engages into a helical spring (68) connected rotationally conjointly to one of the two components (65, 66) and which thus divides the windings of the helical spring into two sections (68a, 68b), the length ratio of which in an axial direction changes in the event of a relative rotation of the two components (65, 66).

4. Drive apparatus (10, 100) for motor vehicles according to one of Claims 1 to 3, **characterized in that** the actuator (64) is designed as an axial drive with a fluid-operated ring-shaped piston.

5. Drive apparatus (10, 100) for motor vehicles according to one of Claims 1 to 4, **characterized in that**
the secondary drive machine (80) of the drive apparatus (10, 100) is designed as an electromechanical energy converter which has a stator device (65) and a rotor device (66), which rotor device is arranged on the stator device (65) and is rotatable about an axis of rotation (83) and forms the secondary drive element of the secondary drive machine (80),
the rotor device (66) has a rotor recess which is arranged concentrically with respect to the axis of rotation (83), and
the clutch device (30, 130) is arranged radially within the rotor recess.

6. Drive apparatus (10, 100) for motor vehicles according to Claim 5,
**characterized in that** the clutch device (30, 130) is, in an axial direction along the axis of rotation (83), arranged at least partially within the rotor recess.

7. Drive apparatus (10, 100) for motor vehicles according to one of Claims 1 to 6, **characterized in that**
the mechanical energy store (62) of the actuating device (60) of the drive apparatus (10, 100) is mounted axially fixedly in relation to the axis of rotation (83) of the secondary drive element of the secondary drive machine (80),
the mounting divides the mechanical energy store (62) radially into an inner section and an outer section, and
the ratio of radial lengths of the inner and of the outer section is less than 4:1.

8. Drive apparatus (10, 100) for motor vehicles according to Claim 7, **characterized in that** the ratio of the radial lengths of the inner and of the outer section is less than 3:1.

## Revendications

1. Ensemble d'entraînement (10, 100) pour véhicules automobiles, l'ensemble présentant :
une machine d'entraînement primaire dotée d'un arbre d'entraînement primaire (20),
une machine (80) d'entraînement secondaire dotée d'un élément d'entraînement secondaire,
un dispositif d'accouplement (30, 130) doté d'un dispositif d'entrée (40) relié à rotation solidaire à l'arbre d'entraînement primaire (20), un dispositif de sortie (50) relié à rotation solidaire à la fois à l'élément d'entraînement secondaire et au dispositif entraîné (70) et par lequel le couple de rotation de la machine d'entraînement primaire ou de la machine (80) d'entraînement secondaire peut être transféré sélectivement,
un élément d'accouplement (31, 131) prévu pour transmettre le couple de rotation au dispositif d'entrée (40) et un dispositif d'actionnement (60) qui établit et libère une liaison à rotation solidaire entre le dispositif d'entrée (40) et le dispositif de sortie (50),
un dispositif entraîné (70),
le dispositif d'actionnement (60) présentant un accumulateur (62) d'énergie mécanique prévu pour appliquer une force de poussée entre le dispositif d'entrée (40) et le dispositif de sortie (50) en vue d'établir le transfert du couple de rotation dans le dispositif d'accouplement (30, 130),
**caractérisé en ce que**
le dispositif d'actionnement (60) présente un actionneur (64) prévu pour appliquer entre le dispositif d'entrée (40) et le dispositif de sortie (50) une deuxième force de poussée qui se superpose à la première force de poussée de l'accumulateur (62) d'énergie mécanique,
**en ce que** le niveau de la deuxième force de poussée dépend de la différence entre le couple de rotation transférable et le couple de rotation à transférer et
**en ce qu'**un dispositif de commande détermine la différence sur la base de paramètres de fonctionnement de l'ensemble d'entraînement (10, 100) qui ont été saisis.

2. Ensemble d'entraînement (10, 100) pour véhicules automobiles selon la revendication 1, **caractérisé en ce que** l'actionneur (64) est configuré comme entraînement électromécanique axial.

3. Ensemble d'entraînement (10, 100) pour véhicules automobiles selon la revendication 2, **caractérisé en ce que** l'actionneur (64) est configuré de telle sorte qu'il présente deux composants (65, 66) qui peuvent tourner l'un par rapport à l'autre en vue de former un déplacement relatif axial l'un par rapport à l'autre dans la direction périphérique et **en ce que** le déplacement relatif axial des deux composants (65, 66) l'un par rapport à l'autre est provoqué par un moyen d'engagement (67) qui engage un ressort hélicoïdal (68) relié à rotation solidaire à l'un des deux composants (65, 66) et qu'ainsi les enroulements du ressort hélicoïdal se divisent en deux sections (68a, 68b) dont le rapport de longueur dans la direction axiale se modifie lorsque les deux composants (65, 66) sont tournés.

4. Ensemble d'entraînement (10, 100) pour véhicules automobiles selon l'une des revendications 1 à 3, **caractérisé en ce que** l'actionneur (64) est configuré comme entraînement axial doté d'un piston annulaire alimenté en fluide.

5. Ensemble d'entraînement (10, 100) pour véhicules automobiles selon l'une des revendications 1 à 4, **caractérisé en ce que** la machine (80) d'entraînement secondaire de l'ensemble d'entraînement (10, 100) est configurée comme convertisseur électromécanique d'énergie qui présente un dispositif de stator (65) et un dispositif de rotor (66) apte à tourner autour d'un axe de rotation (83) et disposé dans le dispositif de stator (65), qui forme l'élément d'entraînement secondaire de la machine (80) d'entraînement secondaire,
**en ce que** le dispositif de rotor (66) présente une découpe disposée concentriquement par rapport à l'axe de rotation (83) et
**en ce que** le dispositif d'accouplement (30, 130) est disposé radialement à l'intérieur de la découpe du rotor.

6. Ensemble d'entraînement (10, 100) pour véhicules automobiles selon la revendication 5, **caractérisé en ce que** le dispositif d'accouplement (30, 130) est disposé le long de l'axe de rotation (83), au moins partiellement à l'intérieur de la découpe du rotor dans la direction axiale.

7. Ensemble d'entraînement (10, 100) pour véhicules automobiles selon l'une des revendications 1 à 6, **caractérisé en ce que** l'accumulateur (62) d'énergie mécanique du dispositif d'actionnement (60) de l'ensemble d'entraînement (10, 100) est monté de manière axialement fixe par rapport à l'axe de rotation (83) de l'élément d'entraînement secondaire de la machine (80) d'entraînement secondaire,
**en ce que** le montage de l'accumulateur (62) d'énergie mécanique se divise radialement en une section intérieure et une section extérieure et
**en ce que** le rapport entre la longueur radiale de la section intérieure et de la section extérieure est inférieur à 4:1.

8. Ensemble d'entraînement (10, 100) pour véhicules automobiles selon la revendication 7, **caractérisé en ce que** le rapport entre la longueur radiale de la section intérieure et de la section extérieure est inférieur à 3:1.
